# FASCICULE DE BREVET EUROPEEN

(11) **EP 2 474 463 B1**
(45) Date de publication et mention de la délivrance du brevet: **11.05.2016**
(21) Numéro de dépôt: 12150492.2
(22) Date de dépôt: 09.01.2012
(51) Int. Cl.: B62J 99/00, B62J 6/18, B62K 19/30, F16C 1/10, F16C 1/26

(54) **Dispositif amovible de passage de câble dans un cadre de cycle**
Abnehmbare Vorrichtung zur Kabeldurchführung in einem Zweiradrahmen
Removable device for guiding a cable in a cycle frame

(30) Priorité: 11.01.2011 FR 1150226
(43) Date de publication de la demande: 11.07.2012
(73) Titulaire: Look Cycle International, 58028 Nevers Cedex (FR)
(72) Inventeur: Lanz, Matthieu, 58000 NEVERS (FR)
(74) Mandataire: Delprat, Olivier

(56) Documents cités:
- EP-A1- 1 787 899
- EP-A2- 1 531 121
- DE-U1- 20 203 280
- US-A- 5 236 212
- US-B1- 6 220 398
- US-B1- 6 551 008

## Description

L'invention concerne, de manière générale les cadres de cycle et concerne en particulier le passage d'un câble au travers d'un cadre de cycle. EP 1 531 121 montre un dispositif selon le préambule de la revendication 1.

Plus particulièrement, l'invention se rapporte à une butée de gaine de câble permettant d'appliquer un effort de traction sur le câble pour actionner un organe mécanique du cycle, et à un passe-gaine destiné à permettre le passage d'un câble entouré d'une gaine dans un cadre de cycle.

Comme on le sait, les câbles qui équipent les cycles relient les manettes de commande aux organes mécaniques, tel que l'étrier de frein ou le dérailleur.

Traditionnellement, les câbles étaient tout d'abord fixés à l'extérieur du cadre. Il a ensuite été proposé de les faire passer partiellement à l'intérieur du cadre, en particulier en ce qui concerne les cycles à usage sportif ou de compétition. Dans tous les cas, lorsque les câbles circulent à l'extérieur du cadre, ils sont montés de manière coulissante à l'intérieur d'une gaine résistante en compression axiale de manière à permettre une prise d'appui pour exercer un effort de traction sur le câble et actionner l'organe mécanique correspondant.

En ce qui concerne le cheminement du câble à l'intérieur du cadre, plusieurs solutions ont été proposées.

La première solution consiste à prévoir une gaine interne dans laquelle est inséré le câble. Cette gaine est mise en place dans le cadre lors de sa fabrication. Cette solution est avantageuse dans la mesure où elle permet un guidage du câble dans le cadre lors de son installation ou son remplacement. En outre, les orifices d'entrée et de sortie de câble pratiqués dans le cadre peuvent alors être de faibles dimensions, ce qui évite de nuire à la rigidité et à la fiabilité du cadre.

Une autre solution consiste à faire passer le câble dans le cadre avec sa propre gaine. Un passe-gaine est alors avantageusement utilisé pour le passage du câble et de sa gaine dans le cadre.

Enfin, une troisième solution consiste à faire passer le câble nu dans le cadre, sans gaine. Cette solution est avantageuse en termes de gain de poids et en efficacité. En effet, le câble, nu dans le cadre, est soumis à beaucoup moins de frottements et pourra ainsi mieux coulisser.

Dans tous les cas, il a été constaté que le passage des câbles dans le cadre permet un gain appréciable en termes d'aérodynamisme.

Toutefois, lorsque l'on prévoit une gaine spécifique interne pour le câble ou lorsque l'on fait passer le câble à nu dans le cadre, une butée de gaine doit être prévue à l'endroit de chaque ouverture de passage du câble, contre laquelle vient reposer la gaine externe du câble.

La solution consistant à faire passer le câble à nu dans le cadre permet d'utiliser un orifice d'entrée de dimensions relativement faibles. On peut par ailleurs utiliser une butée de gaine fixe à l'entrée du câble. Il est toutefois nécessaire de disposer d'une grosse ouverture dans le cadre à sa sortie. Une butée de sortie démontable peut alors être mise en place pour fermer l'ouverture.

Diverses solutions ont été proposées dans l'état de la technique pour la réalisation d'une butée de gaine amovible.

Il a tout d'abord été proposé de positionner une butée de gaine de câble dans l'ouverture du cadre et de la maintenir grâce à l'effort de pression appliqué par la gaine sur la butée. Il a toutefois été constaté qu'un tel agencement ne permet pas de garantir le positionnement de la butée dans l'ouverture du cadre de sorte que la butée a tendance à se dégager de son emplacement et entraîner un contact direct du câble sur le cadre ce qui entraîne une dégradation du cadre.

Il a également été proposé de réaliser la butée sous la forme d'un élément déformable élastiquement en dotant la butée de gaine d'une patte crantée et déformable latéralement de manière à permettre un montage par encliquetage de la butée dans l'ouverture.

Il a enfin été proposé de fixer la butée de gaine par vissage sur le cadre. Bien que cette solution soit avantageuse dans la mesure où elle garantit le positionnement de la butée dans l'ouverture, elle implique de prévoir un perçage dans le cadre à proximité immédiate de l'ouverture du cadre, ce qui a tendance à le fragiliser.

On pourra à cet égard se référer aux documents WO 2009097731 ; DE 20319887U ; EP-B-0184429 ; DE 202004017896U; NL 1025343C; US 4,768,798 ; US 4,915,404 ; US 5,433,465 ; US 5,478,100; US 2010175517 et US 7,114,738 qui décrivent divers agencements de passage de câble dans un cadre. Le document US 5,478,100 prévoit en particulier le montage d'une butée de gaine par collage ou rivetage sur le cadre.

Au vu de ce qui précède, le but de l'invention est de proposer, de manière générale, un dispositif de passage de câble dans un cadre de cycle permettant de palier tout ou partie des inconvénients précités.

Un autre but de l'invention est de proposer une butée de gaine de câble dédiée au passage à nu d'un câble dans un cadre de cycle et garantissant un montage fiable de la butée sur le cadre, tout en conservant le caractère amovible de la butée.

L'invention a encore pour but de proposer un dispositif passe-gaine pouvant être monté de manière fiable sur une ouverture pratiquée dans un cadre, tout en restant amovible.

Il est donc proposé un dispositif amovible de passage de câble dans un cadre de cycle comprenant un corps venant se monter en appui sur le cadre dans une ouverture pratiquée pour le passage du câble et comprenant un orifice pour le passage du câble.

Ce dispositif comporte en outre, selon une caractéristique générale, un organe de serrage monté par vissage sur le corps, ledit organe de serrage étant déformable lors du vissage entre une première configuration de repos non déformée correspondant à une position d'insertion de l'organe de serrage dans l'ouverture du cadre et une deuxième configuration déformée correspondant à une position de serrage du dispositif contre le cadre.

Le corps peut comporter au moins un orifice additionnel pour le passage d'au moins un autre câble.

Avantageusement, l'organe de serrage a une forme complémentaire de celle du corps et est bloqué en rotation par rapport au corps en position non déformée.

L'organe de serrage peut avoir une section transversale en forme de U et comprendre une base pourvue d'un filetage destiné à recevoir une vis de serrage et deux branches latérales pourvues chacune d'un rebord d'extrémité destiné à venir s'appuyer contre le cadre.

Dans un mode de réalisation, l'organe de serrage est réalisé à partir d'une tôle pliée en forme de profilé.

Elle peut par exemple être réalisée en acier déformable élastiquement.

Selon une autre caractéristique, le corps comprend une tête proximale délimitant un épaulement périphérique destiné à venir en appui contre une surface externe du cadre et une partie distale destinée à venir s'engager dans l'ouverture du cadre.

Dans un mode de réalisation, la partie distale du corps comporte deux rampes longitudinales divergentes sur lesquelles s'appliquent respectivement les branches latérales de l'organe de serrage.

L'orifice du corps est de préférence incliné par rapport au plan général de la tête proximale.

Le corps peut par ailleurs comporter en outre un trou axial pour le passage d'une vis de serrage.

Le corps peut par ailleurs être réalisé en tout matériau rigide, tel que l'aluminium, une matière plastique, un composite, ou une matière plastique chargée de fibres.

Dans un mode de mise en oeuvre, le dispositif de passage de câble constitue une butée de gaine de câble, le corps comprenant une surface d'appui pour la gaine, ladite surface d'appui pour la gaine comprenant une surface annulaire entourant ledit orifice.

Dans un autre mode de mise en oeuvre le dispositif de passage de câble peut constituer un passe-gaine.

D'autres buts, caractéristiques et avantages de l'invention apparaitront à la lecture de la description suivante, donnée uniquement à titre d'exemple non limitatif et fait en référence aux dessins annexés sur lesquels :
- la figure 1 est une vue partielle d'un cadre de cycle, montrant le cheminement interne d'un câble ;
- la figure 2 illustre le montage du câble sur le cadre ;
- les figures 3 et 4 sont des vues de détail de la figure 2, montrant le positionnement dans le cadre d'un dispositif de passage selon l'invention formant butée de gaines butées de gaine dans le cadre ;
- la figure 5 est une vue de côté d'une butée de gaine conforme à l'invention ;
- la figure 6 est une vue de face de la butée de la figure 5 ;
- la figure 7 est une vue en perspective du corps de butée ;
- les figures 8 et 9 montrent la butée de gaine, respectivement en position de repos et en position de serrage ; et
- la figure 10 illustre un autre mode de mise en oeuvre d'un dispositif selon l'invention, constituant un passe-gaine.

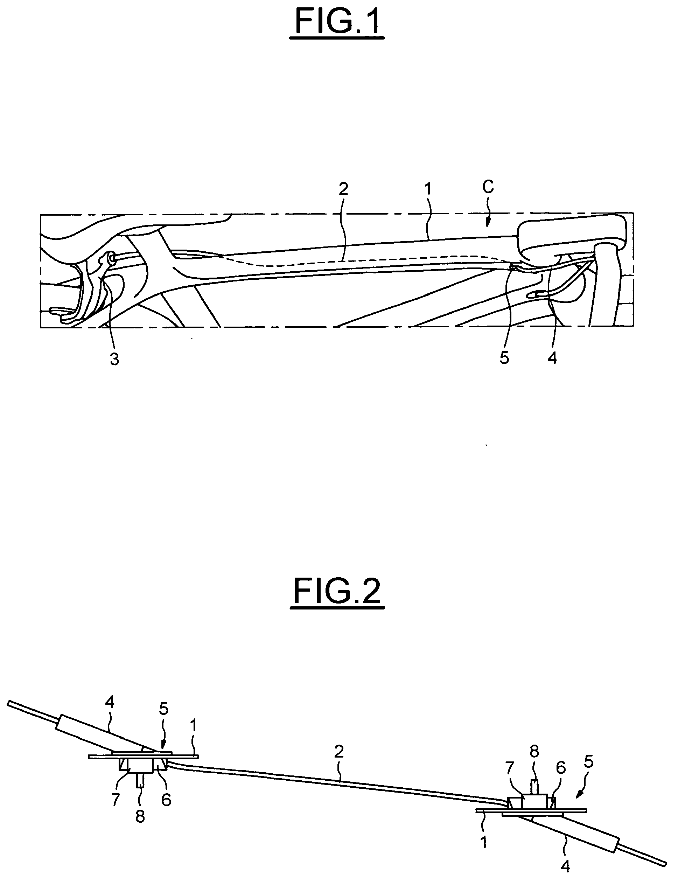

En se référant tout d'abord aux figures 1 à 9, on va tout d'abord décrire un premier mode de mise en ouvre d'un dispositif de passage de câble selon l'invention, dans lequel le dispositif constitue une butée de gaine.

Sur la figure 1, on a représenté une vue partielle d'un cadre C de cycle et, en particulier, son tube horizontal 1 dans lequel chemine un câble de frein 2 tendu entre une manette (non représentée), prévue par exemple au niveau du cintre du guidon, et un étrier de frein 3.

Dans l'application envisagée, le câble 2 chemine à nu dans le tube 1 du cadre. Lorsqu'il s'étend à l'extérieur du cadre, il est entouré par une gaine 4 conventionnelle, résistante en compression axiale pour permettre une prise d'appui pour tendre le câble et actionner l'étrier 3.

Comme on le voit également sur la figure 2, des butées de gaine 5 sont montées dans des ouvertures pratiquées à cet effet dans le cadre pour permettre le passage du câble tout en délimitant des surfaces de butée pour la gaine 4.

On notera que l'application illustrée sur les figures 1 et 2 montre spécifiquement le passage d'un câble de frein dans le cadre pour l'actionnement d'un étrier de frein. Mais, comme le révèle la figure 1 qui montre également la présence d'un câble de dérailleur, on notera que l'invention concerne, de manière générale, le passage de câbles mécanique d'actionnement de tout organe mécanique du cycle susceptible d'être actionné par câble ou le passage d'un câble électrique, notamment pour dérailleur électrique, ou encore le passage d'une gaine hydraulique notamment pour un système de freinage.

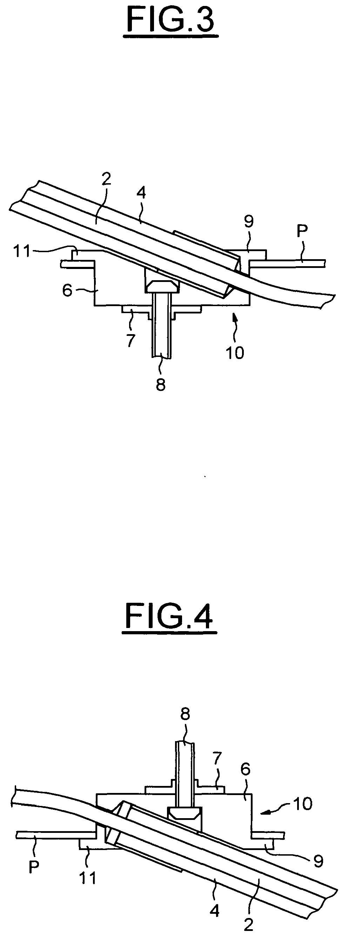

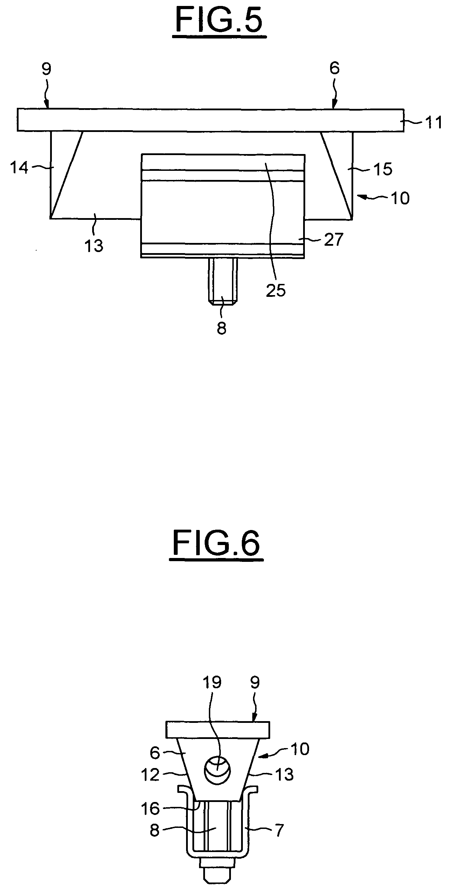

En se référant aux figures 3 et 4, qui illustrent une vue en coupe longitudinale des deux butées de gaine prévues au niveau des deux orifices de passage de câble et également aux figures 5 et 6 qui illustrent respectivement une vue de côté et une vue de face d'une butée de gaine, on voit que la butée 5 comprend essentiellement un corps 6 venant se monter à travers l'orifice de passage de câble pratiqué dans le cadre et venant s'appuyer contre la surface périphérique externe du cadre, un organe de serrage 7 et une vis 8 assurant, au vissage, le serrage de l'organe 7 contre la surface interne de la paroi P du cadre.

Le corps de butée 6 comprend une tête proximale 9 et une partie distale 10 qui vient, au montage, s'insérer dans l'orifice de passage de câbles. L'ensemble est réalisé en une seule pièce en matériau dur et léger, par exemple en aluminium, en matière plastique, en composite, en matière plastique chargée de fibres, ... ou en tout autre matériau dur et léger approprié pour l'utilisation envisagée. On notera que le corps de butée 6 est réalisé de manière à présenter des sections en coupe transversale de forme complémentaire de celle de l'orifice de passage de câble, la tête 9 présentant des dimensions accrues de manière à délimiter un épaulement périphérique 11 par lequel le corps 6 vient s'appuyer contre la surface externe du cadre.

En se référant plus particulièrement aux figures 5 et 6, la partie distale 10 comporte deux bords longitudinaux 12 et 13 mutuellement opposés et deux bords transversaux 14 et 15. Comme on le voit, les deux bords longitudinaux 12 et 13 constituent deux surfaces planes rectilignes s'étendant de manière divergente à partir de l'extrémité libre 16 de la partie distale 10 en direction de la tête proximale 9. Les deux bords transversaux 14 et 15 ont, quant à eux, une forme complémentaire de celle de l'orifice de passage de câble.

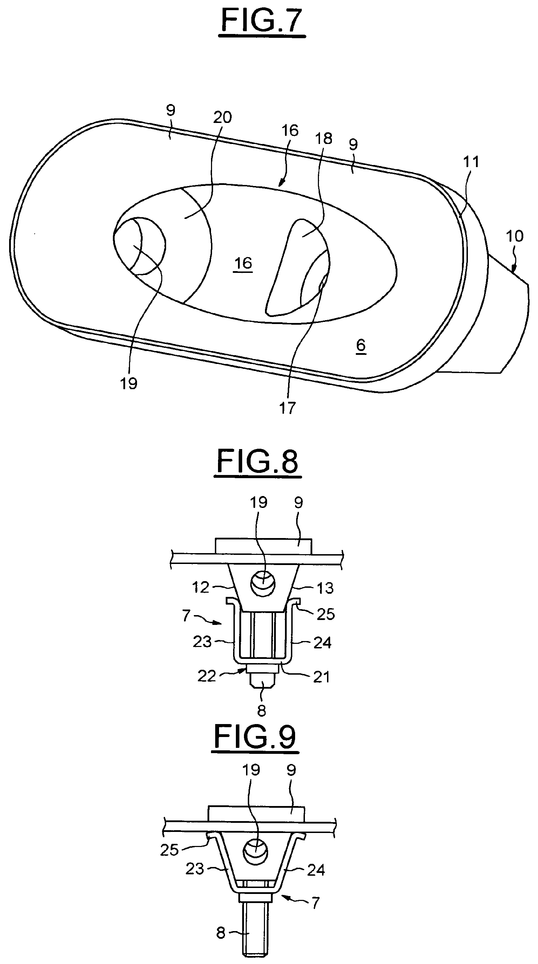

Comme le montre la figure 7, la tête proximale 9 a ici une forme générale ovale et comporte, au niveau de sa zone médiane, une empreinte 16 concave pourvue, en son centre, d'un trou axial 17 pour le passage de la vis de serrage 8 associé à une empreinte 18 destinée à recevoir la tête de la vis de serrage. L'empreinte 16 est également dotée d'un orifice 19 dédié au passage du câble et décalé latéralement par rapport au trou axial 17. Cet orifice est pratiqué dans le corps de butée de sorte qu'il soit globalement orienté dans un plan de symétrie du corps de butée tout en étant incliné par rapport au plan général de la tête 9. Comme le montrent les figures 3 et 4, on pourra pratiquer l'orifice 19 dans le corps de butée de sorte que son axe forme un angle d'environ 30° par rapport au plan général de la tête proximale 9, en fonction de l'angle souhaité d'insertion du câble dans le cadre.

Lorsqu'il s'agit d'un passage d'un câble mécanique, la tête 9 est par ailleurs dotée d'une surface de butée pour la gaine. Cette surface est ici formée par une surface annulaire 20 entourant l'orifice de manière à recevoir la face d'extrémité libre de la gaine. Cette surface annulaire 20 est dès lors orientée perpendiculairement à l'axe de l'orifice et forme ainsi, par exemple, un angle d'environ 60° par rapport au plan général de la tête proximale 9.

On notera cependant que la tête proximale 9 peut être dotée d'un ou de plusieurs orifices pour le passage d'un ou de plusieurs câbles associés chacun, éventuellement, à une surface de butée.

En ce qui concerne l'organe de serrage 7, celui-ci est par exemple réalisé à partir d'une tôle élastiquement déformable en forme de profilé en U. Cet organe 7 a une forme complémentaire de celle du corps 6 et comporte ainsi une base 21 pourvue d'un orifice 22 fileté, ou associé à un écrou rapporté, destiné à s'étendre de manière coaxiale au trou 17 et dédié au passage de la vis de serrage, et deux branches latérales 23 et 24 déformables latéralement et pourvues chacune d'un rebord d'extrémité telle que 25 destinée à venir s'appuyer, au serrage, contre la surface interne du tube de cadre.

Au repos, les deux branches latérales 23 et 24 s'étendent de manière globalement parallèle et sont séparés d'une distance correspondant sensiblement à celle des deux bords longitudinaux 12 et 13 de la partie distale du corps de butée, au niveau de leur extrémité libre, tout en étant légèrement supérieure de manière à permettre un maintien de l'organe de serrage sur le corps de butée dans une position pré-assemblée.

L'organe de serrage 7 est dès lors susceptible d'adopter une première configuration, visible sur la figure 8, qui correspond à une position préassemblée bloquée en rotation, dans laquelle les deux branches latérales 23 et 24 ne sont pas sollicitées ou sont légèrement déformées de manière à rester en appui contre la zone d'extrémité des deux bords longitudinaux de la partie distale 10 du corps de butée et une position déformée, visible sur la figure 9, dans laquelle les deux branches latérales 23 et 24 sont déformées et écartées l'une de l'autre.

On notera qu'en position de repos, les rebords d'extrémité 25 des branches 23 et 24 sont séparés d'une distance inférieure à une dimension transversale de l'orifice de passage de câble. Au contraire, lors du serrage, au moyen de la vis, les branches latérales 23 et 24 sont déformées sous l'action des rampes 12 et 13 longitudinales du corps de butée de manière à s'écarter d'une distance supérieure à la dimension latérale de l'orifice de passage de câble. Dans cette position, la paroi du tube de cadre est serrée entre la tête proximale 9 du corps de butée et les bords d'extrémité de l'organe de serrage de sorte que la butée de gaine est fermement maintenue en position dans l'orifice de passage de câble.

L'ensemble reste toutefois amovible. En effet, en desserrant la vis de serrage, l'organe de serrage 7, guidé par les rampes longitudinales 12 et 13 est repositionné dans sa position de repos permettant le démontage de la butée de gaine. On notera que le serrage et le desserrage de l'organe de serrage sont facilités en réalisant les bords d'extrémité de ces branches latérales sous une forme coudée facilitant leur glissement contre les rampes 12 et 13.

Comme on le conçoit, l'invention qui vient d'être décrite, qui utilise un organe de serrage déformable latéralement par vissage sur un corps de butée, permet de réaliser une butée de gaine amovible dans un agencement fiable, évitant tout risque de dégagement intempestif de la butée et ce, sans nécessité de perçage additionnel du cadre qui serait susceptible d'altérer sa rigidité et sa fiabilité. Il est ainsi possible de proposer un passage de câble dans le cadre, ce qui est avantageux en termes d'aérodynamisme et d'esthétique, sans nécessiter de gaine interne, ce qui présente un avantage en termes de gain de poids et d'efficacité.

Mais on notera que l'invention n'est pas limitée au mode de réalisation décrit.

En effet, dans le mode de réalisation décrit précédemment, l'organe de serrage est réalisé sous la forme d'une tôle pliée sous la forme d'un profilé en U comprenant deux branches latérales pouvant être déformées par serrage par coopération avec deux rampes prévues sur le corps de butée.

Bien entendu, on ne sort pas du cadre de l'invention lorsque l'organe de serrage adopte toute autre configuration déformable par serrage.

On notera enfin que, comme indiqué précédemment, le dispositif selon l'invention peut également être réalisé sous la forme d'un passe-gaine destiné au passage d'un câble entouré de sa propre gaine dans un cadre de cycle.

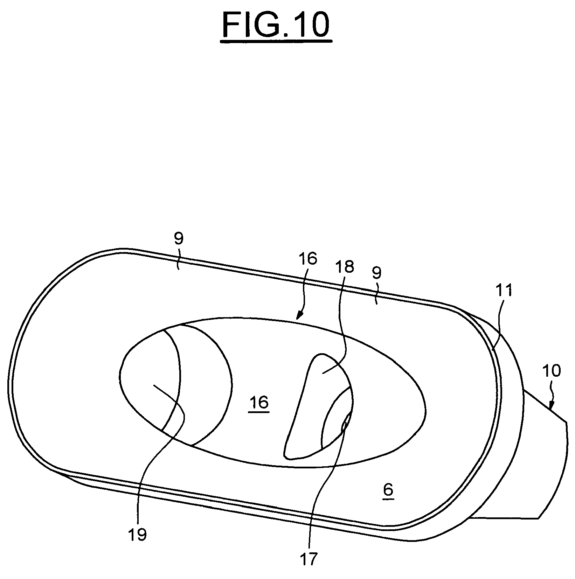

On a représenté sur la figure 10 une vue générale d'un tel passe-gaine.

Comme on le voit sur cette figure, sur laquelle des éléments identiques à ceux décrits précédemment en référence aux figures 1 à 9 portent les mêmes signes de référence, le passe-gaine comprend un corps 6 ayant une structure similaire à celui du corps de butée et un organe de serrage identique à l'organe de serrage de la butée de gaine.

En raison de l'application envisagée, le corps 6 du passe-gaine, qui est par ailleurs identique au corps de butée, est toutefois dépourvu de surface d'appui pour la gaine et comporte un orifice 19 de diamètre élargi pour permettre un coulissement de la gaine.

## Revendications

1. Dispositif amovible de passage de câble dans un cadre de cycle, comprenant un corps (6) venant se monter en appui sur le cadre dans une ouverture pratiquée pour le passage du câble et comprenant un orifice (19) pour le passage du câble, **caractérisé en ce qu'**il comporte un organe de serrage (7) monté par vissage sur le corps, ledit organe de serrage (7) étant déformable lors du vissage entre une première configuration de repos non déformée correspondant à une position d'insertion de l'organe de serrage dans l'ouverture du cadre et une deuxième configuration déformée correspondant à une position de serrage du dispositif contre le cadre.

2. Dispositif selon la revendication 1, **caractérisé en ce que** dans la première configuration de repos, l'organe de serrage est bloqué en rotation par rapport au corps (6).

3. Dispositif selon l'une quelconque des revendications 1 à 2, **caractérisé en ce que** l'organe de serrage a une section transversale en forme de U et comprend une base (21) pourvue d'un filetage destiné à recevoir une vis de serrage et deux branches latérales (23, 24) pourvues chacune d'un rebord d'extrémité (25) destiné à venir s'appuyer contre le cadre.

4. Dispositif selon la revendication 3, **caractérisé en ce que** l'organe de serrage comprend une tôle pliée en forme de profilé.

5. Dispositif selon la revendication 4, **caractérisé en ce que** la tôle est réalisée en acier déformable élastiquement.

6. Dispositif selon l'une quelconque des revendications 3 à 5, **caractérisé en ce que** le corps (6) comprend une tête proximale délimitant un épaulement périphérique (11) destiné à venir en appui contre une surface externe du cadre et une partie distale (10) destinée à venir s'engager dans l'ouverture du cadre.

7. Dispositif selon la revendication 6, **caractérisé en ce que** la partie distale du corps comporte deux rampes longitudinales (12, 13) divergentes sur lesquelles s'appliquent respectivement les branches latérales (23, 24) de l'organe de serrage.

8. Dispositif selon l'une des revendications 6 et 7, **caractérisé en ce que** l'orifice (19) du corps est incliné par rapport au plan général de la tête proximale (9).

9. Dispositif selon l'une quelconque des revendications 6 à 8, **caractérisé en ce que** le corps comporte en outre un trou axial (17) pour le passage d'une vis de serrage.

10. Dispositif selon l'une quelconque des revendicatons 1 à 9, **caractérisée en ce que** le corps est réalisé en un matériau rigide, tel que de l'aluminium, une matière plastique, un composite, ou une matière plastique chargée de fibres.

11. Dispositif selon l'une quelconque des revendications 1 à 10, **caractérisé en ce qu'**il constitue une butée de gaine de câble, et **en ce que** le corps (6) comprend une surface d'appui pour la gaine, ladite surface d'appui pour la gaine comprenant une surface annulaire (20) entourant ledit orifice (19).

12. Dispositif selon l'une quelconque des revendications 1 à 10, **caractérisé en ce qu'**il constitue un passe-gaine.

13. Dispositif selon l'une quelconque des revendications 1 à 12, **caractérisé en ce qu'**il constitue un dispositif de passage d'un câble d'actionnement de tout organe mécanique d'un cycle susceptible d'être actionné par câble.

## Patentansprüche

1. Abnehmbare Vorrichtung zur Kabeldurchführung in einem Zweiradrahmen, umfassend einen Körper (6), der auf dem Rahmen aufliegend in einer Ausnehmung montiert wird, die für die Durchführung des Kabels vorgesehen ist, und umfassend eine Öffnung (19) für die Durchführung des Kabels, **dadurch gekennzeichnet, dass** sie ein Spannelement (7) umfasst, das auf dem Körper durch Schrauben montiert ist, wobei das Spannelement (7) beim Schrauben zwischen einer ersten nicht verformten Ruhekonfiguration entsprechend einer Einsetzposition des Spannelements in die Ausnehmung des Rahmens und einer zweiten verformten Konfiguration entsprechend einer Spannposition der Vorrichtung gegen den Rahmen verformbar ist.

2. Vorrichtung nach Anspruch 1, **dadurch gekennzeichnet, dass** in der ersten Ruhekonfiguration das Spannelement in Bezug zum Körper (6) drehfest gestellt ist.

3. Vorrichtung nach einem der Ansprüche 1 bis 2, **dadurch gekennzeichnet, dass** das Spannelement einen U-förmigen Querschnitt hat und eine Basis (21) umfasst, die mit einem Gewinde, das dazu bestimmt ist, eine Spannschraube aufzunehmen, und zwei Seitenschenkeln (23, 24) versehen ist, die jeweils einen Endrand (25) aufweisen, der dazu bestimmt ist, sich auf den Rahmen zu stützen.

4. Vorrichtung nach Anspruch 3, **dadurch gekennzeichnet, dass** das Spannelement ein in Form eines Profils gefalztes Blech umfasst.

5. Vorrichtung nach Anspruch 4, **dadurch gekennzeichnet, dass** das Blech aus elastisch verformbarem Stahl hergestellt ist.

6. Vorrichtung nach einem der Ansprüche 3 bis 5, **dadurch gekennzeichnet, dass** der Körper (6) einen proximalen Kopf, der einen Umfangsabsatz (11) begrenzt, der dazu bestimmt ist, an einer Außenfläche des Rahmens zur Anlage zu gelangen, und einen distalen Teil (10) umfasst, der dazu bestimmt ist, in die Ausnehmung des Rahmens einzugreifen.

7. Vorrichtung nach Anspruch 6, **dadurch gekennzeichnet, dass** der distale Teil des Körpers zwei divergierende Längsrampen (12, 13) umfasst, an denen jeweils die Seitenschenkel (23, 24) des Spannelements zur Anlage gelangen.

8. Vorrichtung nach einem der Ansprüche 6 und 7, **dadurch gekennzeichnet, dass** die Öffnung (19) des Körpers in Bezug zur allgemeinen Ebene des proximalen Kopfes (9) geneigt ist.

9. Vorrichtung nach einem der Ansprüche 6 bis 8, **dadurch gekennzeichnet, dass** der Körper ferner ein axiales Loch (17) für die Durchführung einer Spannschraube umfasst.

10. Vorrichtung nach einem der Ansprüche 1 bis 9, **dadurch gekennzeichnet, dass** der Körper aus einem starren Material, wie Aluminium, einem Kunststoff, einem Verbundstoff oder einem mit Fasern beaufschlagten Kunststoff, hergestellt ist.

11. Vorrichtung nach einem der Ansprüche 1 bis 10, **dadurch gekennzeichnet, dass** sie einen Anschlag für eine Kabelummantelung darstellt, und dass der Körper (6) eine Stützfläche für die Ummantelung umfasst, wobei die Stützfläche für die Ummantelung eine ringförmige Fläche (20) umfasst, die die Öffnung (19) umgibt.

12. Vorrichtung nach einem der Ansprüche 1 bis 10, **dadurch gekennzeichnet, dass** sie eine Durchgangshülse darstellt.

13. Vorrichtung nach einem der Ansprüche 1 bis 12, **dadurch gekennzeichnet, dass** sie eine Vorrichtung zur Durchführung eines Kabels zur Betätigung jeglichen mechanischen Elements eines Zweirades, das durch ein Kabel betätigt werden kann, darstellt.

## Claims

1. Removable device for running a cable in a cycle frame, comprising a body (6) mounted resting on the frame in an opening made for running the cable and comprising an orifice (19) for running the cable, **characterized in that** it comprises a clamping member (7) mounted by screwing onto the body, the said clamping member (7) being able to be deformed during screwing between a first, undeformed, rest configuration corresponding to a position in which the clamping member is inserted into the opening of the frame and a second, deformed configuration corresponding to a position in which the device is clamped against the frame.

2. Device according to Claim 1, **characterized in that**, in the first rest configuration, the clamping member is prevented from rotating relative to the body (6).

3. Device according to any one of Claims 1 to 2, **characterized in that** the clamping member has a U-shaped cross section and comprises a base (21) provided with a thread designed to receive a clamping screw and two lateral branches (23, 24) each provided with an end rim (25) designed to press against the frame.

4. Device according to Claim 3, **characterized in that** the clamping member comprises a metal sheet folded in the form of a section piece.

5. Device according to Claim 4, **characterized in that** the metal sheet is made of elastically deformable steel.

6. Device according to any one of Claims 3 to 5, **characterized in that** the body (6) comprises a proximal head delimiting a peripheral shoulder (11) designed to rest against an outer surface of the frame and a distal portion (10) designed to be engaged in the opening of the frame.

7. Device according to Claim 6, **characterized in that** the distal portion of the body comprises two divergent longitudinal ramps (12, 13) on which the lateral branches (23, 24) respectively of the clamping member are pressed.

8. Device according to one of Claims 6 and 7, **characterized in that** the orifice (19) of the body is inclined relative to the general plane of the proximal head (9).

9. Device according to any one of Claims 6 to 8, **characterized in that** the body also comprises an axial hole (17) for the passage of a clamping screw.

10. Device according to any one of Claims 1 to 9, **characterized in that** the body is made of a rigid material, such as aluminium, a plastic material, a composite, or a plastic material with added fibres.

11. Device according to any one of Claims 1 to 10, **characterized in that** it forms a cable-sheath stop, and **in that** the body (6) comprises a bearing surface for the sheath, the said bearing surface for the sheath comprising an annular surface (20) surrounding the said orifice (19).

12. Device according to any one of Claims 1 to 10, **characterized in that** it forms a sheath bushing.

13. Device according to any one of Claims 1 to 12, **characterized in that** it forms a device for the running of a cable for the actuation of any mechanical member of a cycle capable of being actuated by cable.
